# EUROPÄISCHE PATENTSCHRIFT

(11) **EP 3 181 967 B1**
(45) Veröffentlichungstag und Bekanntmachung des Hinweises auf die Patenterteilung: **20.02.2019**
(21) Anmeldenummer: 16201798.2
(22) Anmeldetag: 01.12.2016
(51) Int. Cl.: F16K 31/06, F16K 11/24, F16K 39/02, F16K 31/08

(54) **VENTIL**
VALVE
SOUPAPE

(30) Priorität: 18.12.2015 DE 102015122229
(43) Veröffentlichungstag der Anmeldung: 21.06.2017
(73) Patentinhaber: Samson AG, 60314 Frankfurt (DE)
(72) Erfinder: Kolbenschlag, Stefan, 64291 Darmstadt (DE)
(74) Vertreter: Puschmann Borchert Bardehle Patentanwälte Partnerschaft mbB

(56) Entgegenhaltungen:
- EP-A1- 2 073 089
- DE-U1-202012 010 675
- US-A- 3 396 751
- US-A- 4 982 803
- US-A- 5 393 132

## Beschreibung

Die Erfindung betrifft eine Ventilanordnung zum Betätigen eines druckmittelbetriebenen Antriebs eines Prozess-Stellventils für prozesstechnische Anlagen.

Die DE 199 45183 DE offenbart ein direkt betätigtes Ventil, das einen Ventilsitz aufweist, der über eine Kugel verschlossen werden kann. Die Kugel ist über eine vorgespannte Feder in einer unbestromten Lage gehalten. Die Kugel ist über einen druckseitig verbundenen Druckraum mit Fluid beaufschlagt und damit druckentlastet. Die Betätigung des Ventils erfolgt über einen diametral zum Druckraum angeordneten elektromagnetischen Stößel. Ferner offenbart die vorgenannte Druckschrift eine 3/2 Wege Ventilanordnung.

Die DE 10 2009 015 231 A1 offenbart, ein Dosierventil für strömende Medien, insbesondere Leimdüse bzw. Leimventil, mit einem Regel- oder Verschlussorgan, welches durch mindestens einen Magneten, insbesondere durch einen Dauermagneten, verstellbar ist, woher der Magnet bzw. Dauermagnet mindestens teilweise mit einer gegen Einwirkungen des Mediums resistenten, die Magnetkraft nicht beeinträchtigende Beschichtung und/oder Abdeckung versehen ist.

Die DE 11 2004 001 507 T5 offenbart, ein Ventil zum Steuern bzw. Regeln eines Fluidflusses, wobei das Ventil ein Gehäuse umfasst, das eine Kammer definiert, um eine Fluidwechselwirkung zwischen der Fluidzufuhr und der betätigbaren Vorrichtung auszubilden bzw. auszubauen.

Die US 3 396 751 A betrifft ein 3/2 Ventil, bei dem das Ventilelement durch eine Antriebsanordnung ohne Anwendung von hoher Energie in zwei extreme Positionen gesteuert werden kann.

Die US 5 393 143 A und die US 4 982 803 A zeigen einfache Zwei-Wege-Ventile, die in einem Brems-Steuersystem beziehungsweise zur Umleitung von Strömungsmittel von einer Strömungsmittelquelle eines hydraulischen Motors.

Die DE 20 2012 010 675 U1 und die EP 2 073 089 A1 zeigen jeweils in separaten Bauteilen angeordnete Ventile als elektropneumatischer Umformer oder elektropneumatischer Stellungsregler für ein elektropneumatisches Feldgerät beziehungsweise für einen pneumatischen Verstärker, der ein Ventilglied zum Öffnen und Unterbrechen der pneumatische Verbindung zwischen einer pneumatiusche Versorgung und einem Signalausgang umfasst.

Es ist Aufgabe der Erfindung, eine Ventilanordnung anzugeben, die verbesserte Regeleigenschaften aufweist.

Die Aufgabe wird durch die Merkmale des Anspruchs 1 gelöst. Die Unteransprüche bilden vorteilhafte Weiterbildungen der Erfindung.

Die Erfindung betrifft eine Ventilanordnung umfassend ein erstes und ein zweites Ventil in einem Ventilgrundkörper, wobei ein Ventilgrundkörper einen ersten fluidischen Anschluss aufweist, der eingangsseitig mit dem ersten Ventil verbunden ist und ausgangsseitig zum ersten Ventil einen zweiten fludischen Anschluss aufweist und fluidisch parallel zu diesem, die Eingangsseite des zweiten Ventils mit der Ausgangsseite des ersten Ventils verbunden ist, wobei ausgangsseitig zum zweiten Ventil der Ventilgrundkörper einen dritten fluidischen Anschluss aufweist.

So umfasst das Ventil zum Betätigen eines druckmittelbetriebenen Antriebs eines Prozessventils für prozesstechnische Anlagen einen Ventilsitz in einem Ventilgrundkörper, ein Schließkörper und einen elektromagnetischen Antrieb, wobei der Schließkörper kugelförmig ausgebildet ist und mit einem Ventilsitz zur Sperrung des Durchflusses von einer Eingangsseite zu einer Ausgangsseite zusammenwirkt. Der Schließkörperwirkt mit einer Kolbenfläche zusammen, die in einem Kolbenraum bewegbar ist, der mit der Eingangsseite des Ventils verbunden ist.

Durch die Kolbenfläche erfolgt ein Druckausgleich mit der Eingangsseite, so dass eine geringere Antriebskraft notwendig ist.

Die Erfindung zeichnet sich weiter dadurch aus, dass zwischen dem Schließkörper und der Kolbenfläche ein Verbindungselement vorgesehen ist, das mit einem Anker eines elektromagnetischen linearen Direktantriebs in Wirkverbindung steht, wobei die Spulenanordnung im Ventilgrundkörper eingebettet ist und am Anker ein in axialer Richtung abwechselnde Polung aufweisendes Permanentmagnetfeld vorliegt. Durch die Wirkverbindung führt eine Bewegung des Ankers zu einer Axialbewegung der Kolbenfläche. Das Verbindungselement kann im einfachsten Fall durch eine starre Verbindung, beispielsweise über eine Kolbenstange realisiert sein.

Das erfindungsgemäße Ventil, kann ein Regelventil, Steuerventil oder Regel/Steuer-Ventil sein.

Durch die Integration des elektromagnetischen Antriebs zwischen Stellkörper und Kolbenraum wird die träge Masse der Stellanordnung reduziert, wodurch eine höhere Dynamik bei reduzierter Leistungsaufnahme ermöglicht wird.

Insbesondere ist an der dem Verbindungselement abgewandten Seite eine Rückschlussstruktur in das Ventilgehäuse eingebracht. Dadurch kann eine effektive Ansteuerung des Ventils erfolgen.

In vorteilhafter Weise kann die Verbindung zum Druckausgleich von der Eingangsseite des Ventils zum Kolbenraum insbesondere außerhalb der Rückschlussstruktur durch das Gehäuse des Ventilgrundkörpers führen. Dies lässt sowohl die Kolbenfläche maximal groß, und ist fertigungstechnisch einfacher zu realisieren, da beispielsweise eine Durchbohrung des Schließkörpers, der vorzugswiese in Form einer gehärteten Kugel vorliegt nicht notwendig ist. So kann vorgesehen sein, dass die Kolbenfläche eine ununterbrochene Fläche darstellt. Dies vergrößert die effektive Druckausgleichsfläche bei reduzierter Masse. Dadurch wird ebenfalls weniger Energie für den Betrieb benötigt.

Zudem kann der nicht fluidisch beeinflusste Stößel über den Betrieb fluidunabhängig konstante magnetische Eigenschaften aufweisen. Dies sorgt für einen höheren Wirkungsgrad bei der Umsetzung von elektrischer Energie in mechanische Bewegung.

Der elektromagnetische Antrieb umfasst als Anker vorzugsweise einen Permanentmagnetring, eine elektromagnetische Spule und ein magnetisch leitendes, die Spulen umgreifendes Rückschluss-Rohr.

Die Permanentmagnetringe sind insbesondere mit dem Stößel fest verbunden.

Gemäß einer weiteren vorteilhaften Ausgestaltung kann eine Feder in axialer Richtung eingeschaltet sein, die eine definierte antriebslose Ventilposition definiert. Diese stellt den Schließkörper in einen stromlosen "Offen"-zustand oder "Schließ"-zustand.

Vorzugsweise ist der Ventilgrundkörper im Wesentlichen aus einem Vollkörper gebildet.

Gemäß einer bevorzugten Ausgestaltung ist das Ventil ein proportionales Drosselventil.

Vorzugsweise können die Wirkflächen des Ventils so aufeinander abgestimmt sein, dass diese in Schließrichtung und entgegen der Schließrichtung, im Schließzustand ungleich groß sind.

Dadurch kann eine Druckmessung ermöglicht werden, so ist das Stellelement in der Schließstellung nicht in einer Ruhelage sondern muss in dieser Lage bestromt werden, so dass in einem "gerade geschlossen" Zustand eine Druckmessung erfolgen kann. Der in die Spule eingebrachte Strom ist dann proportional zu der gerade zum Schließen oder Öffnen gebrachten Schließkörper benötigten Kraft.

Durch die Anordnung der beiden Ventile in einem Gehäuse kann eine hohe Präzession bei der Überschneidung von Übergangsbereichen zwischen den Elementaren Schaltzuständen, wie sie später beispielhaft beschrieben werden, erreicht werden.

Indem die beiden Ventile der Ventilanordnung unabhängig voneinander steuerbar sind, können verbesserte Regeleigenschaften im Übergangsbereich erreicht werden.

Das erste Ventil ist als Öffner- und das zweite Ventil in einer Schließer - Anordnung ausgeführt.

Vorzugsweise ist der erste fluidische Anschluss ein Zuluft-Anschluss, der zweite fluidische Anschluss ein Abluft-Anschluss und der dritte fluidische Anschluss ein Entlüftungsanschluss, der insbesondere gegen atmosphärischen Druck entlüftet.

So können auf einfache Weise drei Betriebszustände bei einfach wirkenden druckmittelbetriebenen Antrieben umgesetzt werden, nämlich Belüften, Entlüften und Halten. Beim Belüften wird das Abluftventil entgegen seiner Vorspannung in geschlossener Stellung gehalten und das Zulftventil entgegen seiner Vorspannung in offen Stellung gehalten. Beim Entlüften befindet sich das Abluftventil, unterstützt von der Federkraft, in Offenstellung, wobei das Zuluftventil, unterstützt von der Federkraft in Schließstellung gehalten ist. Dies entspricht auch der Sicherheitsstellung im unbestromten Zustand. Beim Halten befinden sich sowohl das Zuluftventil als auch das Abluftventil in geschlossenem Zustand. Die Begriffe Zu- und Abluft beschreiben insbesondere die Druckbeaufschlagungsrichtung, schränken den Gegenstand nicht zwingend auf seine Verwendung in Verbindung mit dem Druckmittel Luft ein, sondern kann auch übergreifend für andere Fluide verstanden werden, die als Druckmittel verwendbar sind. Jedoch ist eine pneumatische Anordnung als Spezialfall im Rahmen der Erfindung zu verstehen.

Gängige Ventilanordnung zur Steuerung eines druckmittelbetriebenen Prozess-Stellventils sind als Kolbenschieber ausgebildet. Eine solche Anordnung ist bei hoher Leckageklasse nur mit höchster Präzession und damit sehr teuer herzustellen.

Durch einen Stellkörper, der an seiner dem Ventilsitz zugewandten Seite eine Kugelform aufweist, kann ein einfacher Aufbau eines dicht schließenden Ventils gewährleistet werden.

Die Ventilanordnung kann zur Steuerung eines druckmittelbetriebenden, insbesondere einfachwirkenden, Prozess-Stellventils mit einer Entlüftungsöffnung vorteilhaft eingesetzt werden.

Ferner kann die Ventilanordnung als Drucksensor verwendet werden.

Dafür sind die Wirkflächen jedes Drosselventils in Schließrichtung und entgegen der Schließrichtung ungleich groß ausgelegt.

Die Druckmessung kann durch Anschluss des zweiten Anschlusses (Abluft) an einen Antrieb eines zu steuernden Prozess-Stellventils mit Positionserkennung erfolgen.

Zur Bestimmung des Drucks erfolgt eine Belüftung des Antriebs (Zunahme des Drucks) bei geschlossenem Entlüftungsventil bis das Stellelement des gesteuerten Prozess-Stellventils gerade anfängt sich zu bewegen, also bis eine Bewegung erkannt wird.

Dann wird das Zuluft-Ventil in Schließstellung gebracht, und das Abluftventil durch Reduzierung der elektrischen Leistungszufuhr so lange geöffnet, bis eine Bewegung des gesteuerten Prozess-Stellventils in die Gegenrichtung erfolgt.

Anhand der dann am ersten und zweiten Ventil anliegenden Leistungen, insbesondere der Stellströme, kann in diesem Gleichgewichtszustand der jeweils anliegende Druck berechnet werden. Die korrekte Berechnung der Drücke abhängig von Federvorspannung, Wirkflächen und Antriebsleistung können im Rahmen des fachmännischen Handelns vorgenommen werden. Es kann also eine Druckmessung sowohl beim Belüften und beim Entlüften stattfinden. Mit der Möglichkeit das erste Ventil und zweite Ventil getrennt ansteuern zu können und den Kenntnissen der Drücke, ist es ebenfalls möglich im Bereich der Umkehrpunkte sowohl das erste Ventil, insbesondere Zuluftventil, als auch das zweite Ventil, insbesondere, Abluftventil in bestimmten Verhältnissen gleichzeitig zu öffen, um eine stoßfreie und schnellst mögliche Bewegungsumkehr des zu regelnden Antriebs zu erzielen. Diese Bewegungsumkehr kann an den jeweiligen Endlagen oder auch an beliebigen Positionen der Antriebsposition geschehen. Hiermit ist es auch möglich, noch feinfühliger an eine bestimmte Sollposition heranfahren zu können. Überschwinger, als auch die Anzahl der Schwingungen beim Einregeln können mittels der getrennten Ansteuerbarkeit und der Ermittlung der Druckverhältnisse reduziert werden.

Die Erfindung liefert eine präzise und kostengünstige Ventilanordnung zur Steuerung eines Fluidstroms von einer Eingangsöffnung zu einer Ausgansöffnung und einer Entlüftungsöffnung.

Weitere Vorteile, Merkmale und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen und in der Zeichnung werden die in der unten aufgeführten Liste der Bezugszeichen verwendeten Begriffe und zugeordneten Bezugszeichen verwendet. In der Zeichnung bedeutet:
- Fig.1: eine schematische Schnittansicht eines direktgesteuerten 2/2 Wege-Ventils, und
- Fig. 2: eine schematische Schnittansicht einer erfindungsgemäßen Ventilanordnung.

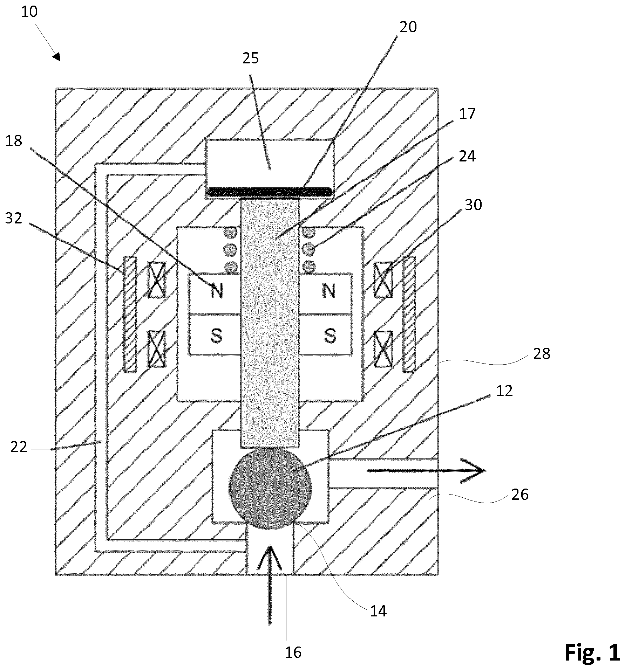

Fig. 1 zeigt eine schematische Schnittansicht eines direktgesteuerten 2/2 Wege-Ventils 10. Das Ventil 10 umfasst einen Schließkörper 12, der kugelförmig ausgebildet ist. Dieser greift in Schließstellung in einen Ventilsitz 14 ein und verschließt den Weg von Zuluftanschluß 16 zum Abluftanschluss 26. Der Schließkörper 12 ist über einen Stößel 17 angetrieben, wobei der Stößel 17 mit einem Permanentmagneten 18 in Axialrichtung fest verbunden ist. Der Stößel 17 weist an seinem dem Schließkörper 12 abgewandten Ende eine Kolbenfläche 20 auf, die über eine in den Ventilgrundkörper 28 integrierte Zuleitung 22 mit dem Fluid des Zuluftanschlusses 16 beaufschlagt werden kann, wodurch ein druckentlasteter Betrieb des Ventils 10 ermöglicht wird. Der Kolben 20 ist dabei in einem Kolbenraum 25 geführt. Um eine unbestromte Sicherheitsstellung zu definieren ist das Ventil durch eine Druckfeder 24 in einer Sicherheitsstellung in Schließstellung vorgespannt. Zur Betätigung des Ventils 10 ist im Ventilgrundkörper 28 eine Spulenanordnung 30 integriert, die bei Bestromung zu einer Axialbewegung des Stößel 17 führt. Um die Effizienz des Antriebs zu erhöhen ist eine rohrförmige Rückschlussstruktur 32 vorgesehen, die die Spulenanordnung 30 einfasst. Die in den Ventilgrundkörper 28 integrierte Zuleitung 22 verläuft dabei außerhalb der Rückschlussstruktur 32. Auf diese Weise ist ein äußerst kompaktes und effizientes 2/2 Wege Ventil 10 geschaffen.

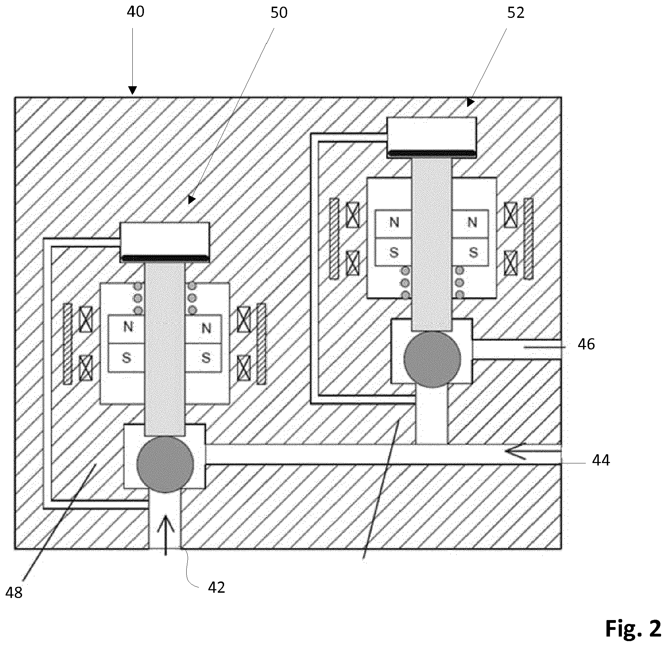

Fig. 2 zeigt eine schematische Schnittansicht einer erfindungsgemäßen Ventilanordnung 40 in Form eines 3/2 Wege Ventils, das zur Regelung eines einfach wirkenden Prozess-Stellventils verwendet wird. Die Ventilanordnung 40 umfasst einen Zuluftanschluss 42 einen Abluftanschluss 44 und einen Entlüftungsanschluss 46. Ferner umfasst die Ventilanordnung 40 einen Ventilgrundkörper 48, in welchem ein erstes Ventil 50 und ein zweites Ventil 52 aufgenommen sind. Der Zuluftanschluss 42 ist eingangsseitig mit dem ersten Ventil 50 verbunden. Ausgangsseitig zum ersten Ventil 50 ist die Eingangsseite des zweiten Ventils 52 und parallel dazu der Abluftanschluss 44 mit dem ersten Ventil verbunden. Ausgangsseitig zum zweiten Ventil 52 ist der Entlüftungsanschluss 46 vorgesehen. Das erste Ventil 50 ist analog der Beschreibung von Fig. 1 ausgestaltet und ist in Schließstellung vorgespannt. Das zweite Ventil 52 entspricht ebenfalls im Wesentlichen der Anordnung gemäß Fig. 1 wobei die Feder derart angeordnet ist, dass die Sicherheitsstellung die Öffnungsstellung ist, wodurch in der Sicherheitsstellung der Abluftanschluss 44 entlüftet ist und der Zuluftanschluss 42 gesperrt ist. Dieser Zustand entspricht der Entlüftungsstellung. Zum Belüften befindet sich das zweite Ventil 52 in geschlossener Stellung das zweite Ventil 50 in Offenstellung. Zum Halten eines am Abluftanschluss 44 anliegenden Drucks, liegen die in der in Fig. 2 gezeigten Ventil-Stellungen vor. Sowohl das erste als auch das zweite Ventil befinden sich dabei in Schließstellung. Der Abluftanschluss 44 des Ventils 50 ist in dieser Ausführung mit dem druckmittelbetriebenen Antrieb des einfach wirkenden Prozess-Stellventils verbunden, welches mit Hilfe des Ventils 50 geregelt werden kann.

Durch die kompakte Anordnung der Ventile und ihrer effizienten Gestaltung kann mit wenig Energie eine präzise Einstellung, insbesondere im Übergangsbereiche zwischen den oben genannten Zuständen erreicht werden, wodurch eine verbesserte Regelbarkeit erreicht wird.

## Patentansprüche

1. Ventilanordnung zum Betätigen eines druckmittelbetriebenen Antriebs eines Prozess-Stellventils für prozesstechnische Anlagen umfassend ein erstes und ein zweites Ventil (50, 52) in einem Ventilgrundkörper (48),
wobei jedes Ventil (50, 52) einen Ventilsitz in dem Ventilgrundkörper (48), einen Schließkörper und einen elektromagnetischen Antrieb mit einer Spulenanordnung umfasst, wobei der Schließkörper kugelförmig ausgebildet ist und mit dem Ventilsitz zur Sperrung des Durchflusses von einer Eingangsseite zu einer Ausgangsseite zusammenwirkt,
wobei der Schließkörper mit einer Kolbenfläche zusammenwirkt, die in einem Kolbenraum bewegbar ist, der mit der Eingangsseite verbunden ist, wobei zwischen dem Schließkörper und der Kolbenfläche ein Verbindungselement vorgesehen ist, das mit einem Anker des elektromagnetischen linearen Direktantriebs in Wirkverbindung steht, wobei die Spulenanordnung im Ventilgrundkörper eingebettet ist und am Anker ein in axialer Richtung abwechselnde Polung aufweisendes Magnetfeld vorliegt, wobei der Ventilgrundkörper (48) einen ersten fluidischen Anschluss (42) aufweist, der eingangsseitig mit dem ersten Ventil (50) verbunden ist und ausgangsseitig zum ersten Ventil (50) einen zweiten fluidischen Anschluss (44) aufweist und parallel zu diesem, die Eingangsseite des zweiten Ventils (52) mit der Ausgangsseite des ersten Ventils (50) verbunden ist, und
wobei ausgangsseitig zum zweiten Ventil (52) der Ventilgrundkörper (48) einen dritten fluidischen Anschluss (46) aufweist.

2. Ventilanordnung nach Anspruch 1, **dadurch gekennzeichnet, dass** bei dem Ventil (50, 52) das Magnetfeld ein Permanentmagnetfeld ist.

3. Ventilanordnung nach Anspruch 1 oder 2, **dadurch gekennzeichnet, dass** bei dem Ventil (50, 52) an der dem Verbindungselement abgewandten Seite der Spulenanordnung eine Rückschlussstruktur in den Ventilgrundkörper eingebracht ist.

4. Ventilanordnung nach einem der vorangehenden Ansprüche, **dadurch gekennzeichnet, dass** bei dem Ventil (50, 52) die Verbindung der Druckseite des Ventils (50, 52) zum Kolbenraum durch den Ventilgrundkörper , insbesondere außerhalb der Rückschlussstruktur, führt.

5. Ventilanordnung nach Anspruch 4, **dadurch gekennzeichnet, dass** bei dem Ventil (50, 52) die Kolbenfläche eine ununterbrochene Fläche darstellt.

6. Ventilanordnung nach einem der vorangehenden Ansprüche, **dadurch gekennzeichnet, dass** bei dem Ventil (50, 52) eine Feder in axialer Richtung eingeschaltet ist, die eine definierte antriebslose Ventilposition definiert.

7. Ventilanordnung nach einem der vorangehenden Ansprüche, **dadurch gekennzeichnet, dass** der Ventilgrundkörper (48) im Wesentlichen aus einem Vollkörper besteht.

8. Ventilanordnung nach einem der vorangehenden Ansprüche, **dadurch gekennzeichnet, dass** das Ventil (50, 52) ein Proportional-Drosselventil ist.

9. Ventilanordnung nach einem der vorangegangenen Ansprüche, **dadurch gekennzeichnet, dass** Kolben und Schließkörper eine Wirkfläche aufweisen, wobei die Wirkflächen in und entgegen der Schließrichtung unterschiedlich groß sind.

10. Ventilanordnung nach Anspruch 1, **dadurch gekennzeichnet, dass** der erste fluidische Anschluss ein Zuluft-Anschluss (42), der zweite fluidische Anschluss ein Abluft Anschluss (44) und der dritte fluidische Anschluss ein Entlüftungsanschluss (46) ist.

11. Ventilanordnung nach einem der vorangehenden Ansprüche, **dadurch gekennzeichnet, dass** Kolben und Schließkörper des ersten Ventils und des zweiten Ventils eine Wirkfläche aufweisen, wobei die Wirkflächen in und entgegen der Schließrichtung unterschiedlich groß sind, so dass eine Druckmessung aufgrund der Verhältnisse der Wirkflächen, der Federkraft über den Betrag der Bestromung beim gerade Schließen oder Öffnen des Ventils möglich ist.

12. Verwendung einer Ventilanordnung nach Anspruch 11, **dadurch gekennzeichnet, dass** eine Druckmessung aufgrund der Verhältnisse der Wirkflächen, der Federkraft über den Betrag der Bestromung beim gerade Schließen oder Öffnen des Ventils erfolgt.

## Claims

1. Valve assembly for actuating a fluid-operated actuator of a process control valve for process engineering systems, comprising a first valve and a second valve (50, 52) in a basic valve body (48), wherein each valve (50, 52) comprises a valve seat in said basic valve body (48), a closing body and an electromagnetic drive with a coil assembly, wherein said closing body is ball-shaped and interacts with said valve seat so as to block the flow from an inlet side to an outlet side, wherein said closing body interacts with a piston surface that can be moved within a piston chamber connected to said inlet side, wherein a connecting element is provided between said closing body and said piston surface, which connecting element is actively connected to an armature of said electromagnetic linear direct drive, wherein said coil assembly is embedded in said basic valve body and a magnetic field with alternating polarity in the axial direction exists at said armature, wherein said basic valve body (48) has a first fluid port (42) which has its inlet side connected to said first valve (50) and which has, on its outlet side to said first valve (50), a second fluid port (44) and, in parallel thereto, the inlet side of said second valve (52) is connected to the outlet side of said first valve (50), and, on the outlet side to said second valve (52), the basic valve body (48) includes a third fluid port (46).

2. Valve assembly as claimed in claim 1, **characterized in that** the magnetic field of said valve (50, 52) is a permanent magnetic field.

3. Valve assembly as claimed in claims 1 or 2, **characterized in that** said valve (50, 52) has a magnetic return structure included in said basic valve body on the side of the coil assembly facing away from said connecting element.

4. Valve assembly as claimed in any one of the preceding claims, **characterized in that** in said valve (50, 52), the connection of the high pressure side of the valve (50, 52) to the piston chamber extends through the basic valve body, in particular outside the magnetic return structure.

5. Valve assembly as claimed in claim 4, **characterized in that** in said valve (50, 52), the piston surface is an uninterrupted surface.

6. Valve assembly as claimed in any one of the preceding claims, **characterized in that** said valve (50, 52) has a spring is connected in an axial direction, which spring defines a defined zero-drive valve position.

7. Valve assembly as claimed in any one of the preceding claims, **characterized in that** the basic valve body (28) essentially consists of a solid body.

8. Valve assembly as claimed in any one of the preceding claims, **characterized in that** said valve (50, 52) is a proportional throttle valve.

9. Valve assembly as claimed in any one of the preceding claims, **characterized in that** said piston and said closing body each include an active surface, which active surfaces differ in size in the closing direction and against the closing direction.

10. Valve assembly as claimed in claim 1, **characterized in that** the first fluid port is an air supply port (42), the second fluid port is an exhaust port (44) and the third fluid port is a vent port (46).

11. Valve assembly as claimed in any one of the preceding claims, **characterized in that** the piston and the closing body of said first valve and said second valve have an active surface, which active surfaces differ in size in the closing direction and against the closing direction, so as to allow a pressure measurement to be performed on the basis of the ratios of the active surfaces, of the spring force via the amount of current applied just as the valve closes or opens.

12. Valve assembly as claimed in claim 11, **characterized in that** a pressure measurement is performed on the basis of the ratios of the active surfaces, of the spring force via the amount of current applied just as the valve closes or opens.

## Revendications

1. Agencement de vanne pour actionner un entraînement opéré par moyen de pression d'une vanne de régulation de processus pour des installations de procédé comprenant une première et une seconde vanne (50, 52) dans un corps de base de vanne (48),
dans lequel chaque vanne (50, 52) comprend un siège de vanne dans le corps de base de vanne (48), un corps de fermeture et un entraînement électromagnétique avec un agencement de bobine,
dans lequel le corps de fermeture a une forme sphérique et coopère avec le siège de vanne pour bloquer le flux depuis un côté entrée jusqu'à un côté sortie,
dans lequel le corps de fermeture coopère avec une surface de piston qui est mobile dans un espace de piston qui est raccordé au côté entrée, dans lequel entre le corps de fermeture et la surface de piston est prévu un élément de raccordement qui est en liaison active avec une armature de l'entraînement direct linéaire électromagnétique, dans lequel l'agencement de bobine est encastré dans le corps de base de vanne, et au niveau de l'armature dans une direction axiale se trouve un champ magnétique présentant une polarité alternée, dans lequel le corps de base de vanne (48) présente une première jonction fluidique (42), qui du côté entrée est raccordée à la première vanne (50) et du côté sortie par rapport à la première vanne (50) présente une deuxième jonction fluidique (44) et parallèlement à celle-ci, le côté entrée de la seconde vanne (52) est raccordé au côté sortie de la première vanne (50), et dans lequel du côté sortie par rapport à la seconde vanne (52) le corps de base de vanne (48) présente une troisième jonction fluidique (46).

2. Agencement de vanne selon la revendication 1, **caractérisé en ce que** dans le cas de la vanne (50, 52) le champ magnétique est un champ magnétique permanent.

3. Agencement de vanne selon la revendication 1 ou 2, **caractérisé en ce que** dans le cas de la vanne (50, 52) une structure de culasse est insérée dans le corps de base de vanne, sur le côté de l'agencement de bobine opposé à l'élément de raccordement.

4. Agencement de vanne selon l'une quelconque des revendications précédentes, **caractérisé en ce que** dans le cas de la vanne (50, 52) le raccordement du côté pression de la vanne (50, 52) mène à l'espace de piston via le corps de base de vanne, en particulier à l'extérieur de la structure de culasse.

5. Agencement de vanne selon la revendication 4, **caractérisé en ce que** dans le cas de la vanne (50, 52) la surface de piston représente une surface ininterrompue.

6. Agencement de vanne selon l'une quelconque des revendications précédentes, **caractérisé en ce que** dans le cas de la vanne (50, 52) un ressort est intercalé dans une direction axiale, lequel définit une position définie de vanne sans entraînement.

7. Agencement de vanne selon l'une quelconque des revendications précédentes, **caractérisé en ce que** le corps de base de vanne (48) consiste essentiellement en un corps plein.

8. Agencement de vanne selon l'une quelconque des revendications précédentes, **caractérisé en ce que** la vanne (50, 52) est une vanne d'étranglement proportionnelle.

9. Agencement de vanne selon l'une quelconque des revendications précédentes, **caractérisé en ce que** piston et corps de fermeture présentent une surface active, dans lequel les surfaces actives dans et à l'encontre de la direction de fermeture sont de tailles différentes.

10. Agencement de vanne selon la revendication 1, **caractérisé en ce que** la première jonction fluidique est une jonction d'air d'admission (42), la deuxième jonction fluidique est une jonction d'air d'évacuation (44) et la troisième jonction fluidique est une jonction d'aération (46).

11. Agencement de vanne selon l'une quelconque des revendications précédentes, **caractérisé en ce que** piston et corps de fermeture de la première vanne et de la seconde vanne présentent une surface active, dans lequel les surfaces actives dans et à l'encontre de la direction de fermeture sont de tailles différentes, de sorte que soit possible une mesure de pression, en raison des conditions des surfaces actives, de la force du ressort sur le montant de l'alimentation en courant au moment de juste fermer ou ouvrir la vanne.

12. Utilisation d'un agencement de vanne selon la revendication 11, **caractérisée en ce que** se réalise une mesure de pression, en raison des conditions des surfaces actives, de la force du ressort sur le montant de l'alimentation en courant au moment de juste fermer ou ouvrir la vanne.
